# EUROPEAN PATENT SPECIFICATION

(11) **EP 2 860 649 B1**
(45) Date of publication and mention of the grant of the patent: **29.03.2017**
(21) Application number: 12878317.2
(22) Date of filing: 17.12.2012
(51) Int. Cl.: G06F 17/50, B29C 70/68, B29C 70/54

(54) **COMPOSITE MATERIAL HAVING BIONIC STRUCTURE, METHOD OF PREPARING SAME, AND MODELING METHOD**
VERBUNDMATERIAL MIT BIONISCHER STRUKTUR, VERFAHREN ZUR HERSTELLUNG DAVON UND MODELLIERUNGSVERFAHREN
MATIÈRE COMPOSITE AYANT UNE STRUCTURE BIONIQUE, SON PROCÉDÉ DE PRÉPARATION ET PROCÉDÉ DE MODÉLISATION

(30) Priority: 08.06.2012 CN 201220269287 U; 08.06.2012 CN 201210187810; 08.06.2012 CN 201210187806
(43) Date of publication of application: 15.04.2015
(73) Proprietor: Advanced Manufacture Technology Center, China Academy of Machinery Science & Technology, Beijing 100083 (CN)
(72) Inventor: SHAN, Zhongde, Beijing 100083 (CN); WU, Xiaochuan, Beijing 100083 (CN); LIU, Feng, Beijing 100083 (CN); KANG, Huairong, Beijing 100083 (CN)
(74) Representative: Vogel, Andreas
(86) International application number: PCT/CN2012/086781
(87) International publication number: WO 2013/181912

(56) References cited:
- EP-A2- 0 341 575
- WO-A1-2008/107983
- WO-A2-2005/121430
- CN-A- 1 709 977
- CN-A- 101 177 523
- CN-A- 101 533 423
- CN-A- 101 950 316
- CN-A- 101 950 316
- CN-A- 102 192 396
- CN-A- 102 693 345
- CN-A- 102 729 494
- US-A1- 2010 262 407
- US-A1- 2011 178 786

## Description

### Technical field

The disclosure relates to the field of bionic manufacturing and more particularly to a composite material having a bionic structure and a preparation method and a modeling method for the same.

### Background

Characterized in superb comprehensive performance, small specific gravity and the like, composite materials have been widely used in the fields of aerospace, automobile, artificial biological tissue, advanced sports goods and so on. In recent years, with continuous advancement of science and technologies, more and more composite materials are needed in various industries, accompanied by the fabrication of the needed composite materials becoming large-scale and complicated. That requires that during the preparation process of composite materials, not only the problem that composite materials are easily delaminated under a stress should be overcome, but problems, including high porosity, more dry fibers and incomplete impregnation, should be relieved.

The emergence of the three-dimensional braiding method addresses the problem that the conventional composite materials are delaminated under an external impact; however, a three-dimensionally braided composite material preform still cannot be completely impregnated by a resin in a subsequent resin impregnation process. The tight contact between fibers of the three-dimensionally braided preform, on one hand, improves the comprehensive mechanical property of the three-dimensionally braided preform, on the other hand, makes it difficult for a resin to impregnate the preform completely and it easy to generate pores between fiber bundles, consequentially, the mechanical property of the impregnated composite material is still reduced by the defects of the incompletely impregnated composite material such as pores and dry fibers, thus, the requirements on a formation technology and an impregnation device are both relatively high. Attempts have been made to improve the structure of a braided composite material preform, that is, to improve the spatial structure of the preform based on currently advanced formation technologies, so that the preform can be better impregnated by a matrix material such as a resin, thereby addressing the problems of porosity and dry fibers and improving the impregnation rate, moreover, as the strict requirements on current forming equipment is eliminated, the production cost of a composite material and the energy consumption for the production of the composite materials are reduced.

CN 101950316 A discloses a method for a modelling a composite material preform having a bionic structure according to the preamble of claim 1, a method of preparing a composite material having a bionic structure according to the preamble of claim 4 and a composite material having a bionic structure according to the preamble of claim 8.

### Summary of the invention

The disclosure is intended to provide a composite material having a bionic structure and a preparation method and a modeling method for the same so as to address the technical problem existing in the prior art that a composite material preform is impregnated incompletely.

To realize the foregoing purpose, a method for modeling a composite material preform having a bionic structure is provided. The method includes the following steps: (1) performing statistics and analysis on spatial structural characteristic values of a retinervus luffae fructus to obtain a mean values of the spatial structural characteristic values; (2) building a model based on the mean values of the spatial structural characteristic values to obtain a primary retinervus luffae fructus structure model, the primary retinervus luffae fructus structure model includes a plurality of interconnected structural units; and (3) performing a finite element stress analysis on the primary retinervus luffae fructus structure model and performing a structural adjustment on the structural units according to the stressed nephogram of the primary retinervus luffae fructus structure model to obtain a bionic retinervus luffae fructus structure model as the structure model of the composite material preform.

Further, the spatial structural characteristic values of a retinervus luffae fructus include: the distance between the longitudinal fibers of the whole retinervus luffae fructus and the structural units inside the retinervus luffae fructus, the positions of node groups of transverse fibers and longitudinal fibers, the phase relation between nodes in each node group and the spatial inclined angle of the fibers connected by each node.

Further, a piece of CAD software is used in the building the model, and a piece of ANSYS software is used in the finite element stress analysis.

In accordance with another aspect of the disclosure, a method for preparing a composite material having a bionic structure is provided. The method includes the following steps: 1) setting up a guiding device and determining a fiber winding order based on the bionic retinervus luffae fructus structure model obtained by using any one of the method above mentioned; 2) winding fibers on the guiding device according to the determined fiber winding order, obtaining a bionic retinervus luffae fructus structure as a composite material preform; and 3) combining the bionic retinervus luffae fructus structure with a matrix to form the composite material.

Further, the guiding device includes: a guide template and a guide sleeve group which includes a plurality of guide sleeves, the guide sleeves are fixedly arranged on the guide template, wherein one or more grooves are arranged on the guide sleeves according to the positions of the nodes in the bionic retinervus luffae fructus structure model so that the fibers can be embedded in the grooves.

Further, a material of the guide sleeve is a carbon fiber or metal, and a material of the fiber is carbon fiber or aramid fiber.

Further, the matrix is a polymer or metal, wherein the polymer includes epoxy resin, phenolic resin, amino resin or unsaturated polyester.

In accordance with still another aspect of the disclosure, a composite material having a bionic retinervus luffae fructus structure is provided. The composite material includes: a bionic retinervus luffae fructus structure obtained based on a bionic retinervus luffae fructus structure model and a matrix filled in the bionic retinervus luffae fructus structure.

Further, the bionic retinervus luffae fructus structure includes: a guide sleeve group consisting of a plurality of guide sleeves; and fibers which are wound on the guide sleeve group according to a fiber winding order determined based on the bionic retinervus luffae fructus structure model.

Further, one or more grooves are arranged on the guide sleeves so that the fibers can be embedded in the grooves.

Further, the bionic retinervus luffae fructus structure includes: a plurality of structural units, each of the structural units includes a transverse fiber layer and a guide sleeve group arranged intersecting the transverse fiber layer.

Further, one or more nodes of the fibers in the transverse fiber layer and the guide sleeves in each guide sleeve group are not located on the same plane.

By means of the technical solution disclosed herein, a composite material preform having a bionic retinervus luffae fructus structure can be formed in a simulated manner, and the bionic retinervus luffae fructus structure endows a composite material with a high tensile strength, a high compression strength and a high bending strength, thus effectively addressing the problem that the conventional composite material preform cannot be impregnated completely.

### Brief description of the drawings

The accompanying drawings described here are provided for a better understanding of the disclosure and constitute one part of the disclosure, and the exemplary embodiments of the disclosure and description thereof are illustrative of the disclosure but are not to be construed as limiting the disclosure. In the accompanying drawings:
Fig. 1 is a front view schematically illustrating the structure of the bionic retinervus luffae fructus structure of a composite material according to an embodiment of the disclosure;
Fig. 2 is a front view schematically illustrating the structure of a structural unit of the bionic retinervus luffae fructus structure of a composite material according to an embodiment of the disclosure;
Fig. 3 is a schematic diagram illustrating a fiber braiding path of a structural unit of the bionic retinervus luffae fructus structure of a composite material according to an embodiment of the disclosure; and
Fig. 4 is a top view schematically illustrating of the structure of a structural unit of the bionic retinervus luffae fructus structure of a composite material according to an embodiment of the disclosure.

### Detailed description of the embodiments

It should be noted that embodiments of the disclosure and the characteristics thereof can be combined with each other if no conflict is caused. The disclosure is described below in detail with reference to accompanying drawings when read in conjunction with embodiments.

Retinervus luffae fructus, the vascular bundle of the mature fruit of a cucurbitaceous plant luffa, is mainly composed of cellulose, hemicellulose and lignin and wholly formed into a spatial network by filiform fibers which grow tangly and interwoven with each other. On the cross section of a retinervus luffae fructus, there are three B-shaped holes which longitudinally penetrate the retinervus luffae fructus; and after the outer fiber nets of the holes are cut off, the internal spatial structure of the retinervus luffae fructus is presented, and the internal spatial structure is mainly formed by the irregularly arranged transverse fiber layers and the dense longitudinal fibers of out layer which are closely connected with each other. The internal fiber layer of a retinervus luffae fructus is a three-dimensional structure but not a laminated structure, that is, the connection points of the same fiber layer and different longitudinal fibers are not on the same plane; moreover, the connection point of the same fiber layer and a single longitudinal fiber exists in a node group form, that is, the connection points of the fiber bundles included in a certain fiber layer and the same longitudinal fiber are distributed in an area according to a certain rule, but not located at the same position. In this way, a space similar to a semi-closed space is formed by an upper and a lower fiber layer and the longitudinal fibers at two sides, this space is originally for storing luffa seeds, and after luffa seeds are removed from a luffa, a retinervus luffae fructus is formed by the semi-closed holes and the complicatedly arranged fibers forming the holes. Due to the existence of the outer longitudinal fiber layer in the axial direction of a retinervus luffae fructus, the anti-impact capacity of the retinervus luffae fructus in a Z direction is relatively high, moreover, as to the internal structure coated by the longitudinal fibers, owing to the existence of unordered holes formed by fibers which are arranged complicatedly and relatively densely and the tight connection of transverse fibers with the longitudinal fibers, the retinervus luffae fructus has a load-bearing support structure in every direction when under an external force, thus, the retinervus luffae fructus is relatively high in tensile strength, compression strength and bending strength, meanwhile, the existence of the holes makes it easier for a preform having such a three-dimensional structure to be completely impregnated by a matrix material such as an impregnating resin, thus effectively addressing the problems of the conventional composite materials such as high porosity and dry fibers.

According to a typical implementation mode, a method for modeling a composite material preform having a bionic structure includes the following steps: (1) performing statistics and analysis on spatial structural characteristic values of a retinervus luffae fructus to obtain the mean values of the spatial structural characteristic values; (2) building a model based on the mean values of the spatial structural characteristic values to obtain a primary retinervus luffae fructus structure model which includes a plurality of interconnected structural units; and (3) performing a finite element stress analysis on the primary retinervus luffae fructus structure model and performing a structural adjustment on the structural units according to the stressed nephogram of the primary retinervus luffae fructus structure model to obtain a bionic retinervus luffae fructus structure model as the structure model of the composite material preform. Creatively applying the structure of a retinervus luffae fructus to the preparation of a composite material preform endows a composite material with a high tensile strength, a high compression strength and a high bending strength and effectively addresses the technical problem that the conventional composite material preform cannot be impregnated completely.

The spatial structural characteristic values of a retinervus luffae fructus can be optionally set as long as the set spatial structural characteristic values are capable of describing the spatial structure of a retinervus luffae fructus relatively accurately. Preferably, the spatial structural characteristic values of a retinervus luffae fructus include: the distance between the longitudinal fibers of the whole retinervus luffae fructus and the structural units inside the retinervus luffae fructus, the positions of the node groups of transverse fibers and longitudinal fibers, the phase relation between nodes in each node group, the spatial inclined angle of the fibers connected by each node and the length value of each kind of characteristics of the fiber in a spatial structural unit. The distance between longitudinal fibers corresponds to the distance between each two guide sleeves, the position of a node group corresponds to the positions of the connection points of a single fiber layer and guide sleeves, the phase relation between nodes specifically refers to the phase relationship among three fiber bundles in each fiber layer, the inclined angles of the three fiber bundles and the distances between the three fiber bundles and connection points of guide sleeves, and the foregoing spatial structural characteristic values are characteristic values of the structural units as well as the whole structure.

In the disclosure, a piece of CAD software is used in the modeling, a piece of ANSYS software is used in the finite element stress analysis, and apparently, other related software is also applicable.

According to a typical implementation mode of the disclosure, a method for preparing a composite material having a bionic structure includes the following steps: 1) setting up a guiding device and determining a fiber winding order based on the created bionic retinervus luffae fructus structure model; 2) winding fibers on the guiding device according to the determined fiber winding order to obtain a bionic retinervus luffae fructus structure as a composite material preform; and 3) combining the bionic retinervus luffae fructus structure with a matrix to form a composite material, wherein a method of impregnation may be used during the combination process.

Preferably, the guiding device includes: a guide template and a guide sleeve group which includes a plurality of guiding sleeves, the guide sleeves are fixedly arranged on the guide template, wherein one or more grooves are arranged on the guide sleeves according to the positions of the nodes in the structure model of a composite material preform so that fibers can be embedded in the grooves.

Preferably, a material of the guide sleeve is a carbon fiber or metal, and a material of the fiber is carbon fiber or aramid fiber. Preferably, the filler is a polymer or metal, wherein the polymer includes epoxy resin, phenolic resin, amino resin or unsaturated polyester.

According to a typical implementation mode of the disclosure, a composite material having a bionic structure includes a bionic retinervus luffae fructus structure obtained based on the foregoing structure model of a composite material perform; and a matrix filled in the bionic retinervus luffae fructus structure which serves as the preform of the composite material.

Preferably, the bionic retinervus luffae fructus structure includes: a guide sleeve group and fibers, wherein the guide sleeve group consists of a plurality of guide sleeves; and the fibers are wound on the guide sleeve group according to a fiber winding order determined based on the structure model of a composite material preform having a bionic structure. The guide sleeve group in the composite material having a bionic structure (may also be called a guide sleeve group with respect to the longitudinal fibers) is equivalent to the longitudinal fibers of a retinervus luffae fructus, and the fibers wound on the guide sleeve group in the shape of a retinervus luffae fructus are equivalent to the transverse fibers of a retinervus luffae fructus.

Preferably, one or more grooves in which the fibers are embedded are arranged on the guide sleeves so as to prevent the fibers wound on the guide sleeve from sliding.

According to a typical implementation mode of the disclosure, a bionic retinervus luffae fructus structure may include a plurality of structural units in which guide sleeve groups are arranged as needed, for example, the guide sleeve groups may be arranged into different shapes, such as, a cube or circle shape, and each structural unit includes a transverse fiber layer and a guide sleeve array arranged intersecting the transverse fiber layer. For example, the guide sleeve array may include nine guide sleeves which are arranged into a 3*3 array. Grooves are arranged on the guide sleeves at the positions of the nodes of the bionic retinervus luffae fructus structure, that is, there are grooves on the outer layers of the guide sleeves, and the grooves are distributed according to the connection points of the fibers and the guide sleeves. According to an embodiment of the disclosure, fibers may be wound by taking the guide sleeve in the middle of the guide sleeve array as the center, and the other eight guide sleeves around the middle structural unit each constitute the center of other structural units, thus, the structural units are not independent from each other.

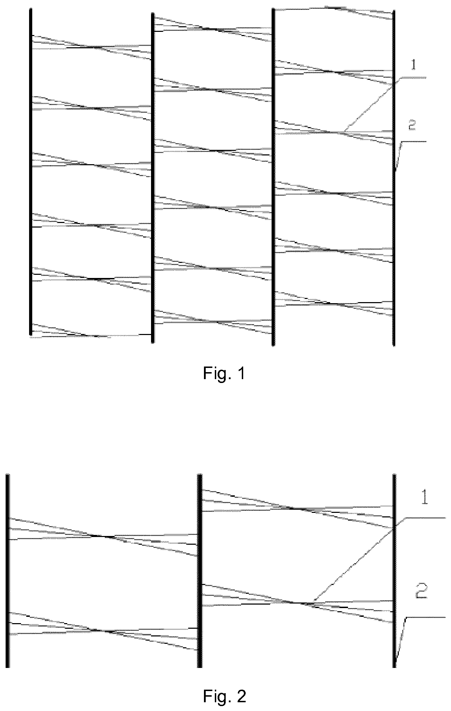

Preferably, one or more nodes of the fiber layers of the composite material having a bionic structure and each guide sleeve are not on the same plane, that is, the engagement of a single fiber layer with a single guide sleeve is presented in the form of a node group, that is, a single transverse fiber layer is connected with a single guide sleeve by a plurality of nodes and the connection points of the transverse fiber layer and different guide sleeves are not on the same plane (as shown in Fig. 1 and Fig. 2), which is beneficial to improving the tensile strength, the compress strength and the bending strength of the composite material.

### Embodiment

Structural characteristics such as the distribution rule of the holes in a retinervus luffae fructus, the winding mode of fibers and the combination mode of transverse fibers and longitudinal fibers are researched first, then a model is designed in a simulated manner using CAD, the built model is debugged and perfected using ANSYS software, embedding one or more grooves are formed on guide sleeves at positions which are determined according to the engagement points of fiber bundles and the guide sleeves, the processed guide sleeves are orderly arranged on a guide template according to the requirements on the structure of a preform, and the grooves of the guide sleeves traversed by the fibers are enhanced during a braiding process, then the braiding of a preform is completed. The internal fiber layer of the preform is tightly combined with the guide sleeves, and a great number of passages are reserved in the internal fiber layer for a matrix such as a resin to flow through, thus avoiding the problems of delamination and stressed deformation and relieving the problem that it is difficult to discharge bubbles during an impregnation process as well as the problem of dry fibers and consequentially improving the comprehensive performance of the composite material.

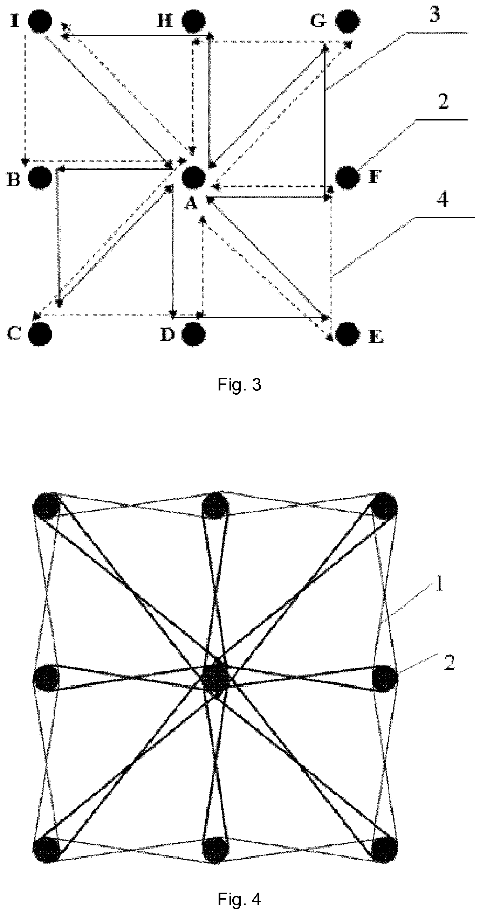

The specific operation steps of the embodiment are as follows:
Step 1: the characteristics of the spatial structure of a retinervus luffae fructus are described, including performing statistics and analysis on the spatial structural characteristic values of the retinervus luffae fructus, including the distance between longitudinal fibers for supporting the whole structure of the retinervus luffae fructus, the position of each connection point group (node group) of transverse fibers and longitudinal fibers, the phase relation between the nodes in a node group, the spatial inclined angle between the fibers connected by each node and the length value of each characteristic of a fiber bundle in a spatial structural unit, so as to obtain the mean value of the spatial structural characteristic vaules;
Step 2: a CAD model is designed on a computer using each spatial structural characteristic value to obtain the three-dimensional structural unit of a preform simulated in a retinervus luffae fructus in spatial structure, the three-dimensional structural unit consists of fibers 1 and a guide sleeve 2 as shown in Fig1, a stress analysis is performed on the built structure model using a piece of finite element analysis software such as ANSYS, and a fine structural adjustment is performed on the structural unit according to the stressed nephogram of the structures to perfect the three-dimensional structure model of a bionic retinervus luffae fructus;
Step 3: one or more grooves are formed on the outer layer of the guide sleeve, wherein the grooves are distributed according to the connection points of the fibers and the guide sleeves in the model;
Step 4: one or more guide pillars are arranged on a guide template based on the foregoing structure model, the guide sleeves provided with one or more grooves are arranged on the guide pillars according to the outline of the section of a rectangle, as shown in Fig. 3, carbon fiber guide sleeves provided with grooves are arranged on the guide template into a 3*3 array and successively numbered from A to I, and successive carbon fiber bundles are selected as a reinforcing material;
Step 5: in the preparation of the preform, a braiding operation is performed by winding fibers in the grooves of the guide sleeves based on the three-dimensional structure of the CAD model; by taking a single fiber layer consisting of three fiber bundles as an example, the braiding is performed layer by layer from the bottom layer to the top layer by winding, starting from the guide sleeve I, the fiber bundles are successively wound on guide sleeves A-B-C-A-D-E-A-F-G-A-H-I, the fiber bundles are wound among the guide sleeve in the way indicated by the arrow lines shown in Fig. 3, that is, the engagement points of the same fiber bundle and different guide sleeves are not on the same plane; after the first braiding path 3 is completed, the fiber bundles are returned to the initial position, that is, the position of the guide sleeve I, then the second braiding path 4 is started in such a manner that the braiding path is as follows: the fiber bundles are orderly wounded on the guide sleeves B-A-C-D-A-E-F-A-G-H-A-I. After the two paths are completed, a complete fiber bundle coating is formed on the outer layer of the preform, and a great many of wide triangular Z-shaped passages are formed inside the preform. After the fibers traversing each groove of all guide sleeves, the guide grooves wounded by the fibers are taken down, then the braiding of the preform is completed, and the structure of the structural unit of the preform observed from the top is shown in Fig. 4;
Step 6: a filler is impregnated into the preform to obtain a composite material having a bionic structure.

By simulating the spatial structural characteristics of a retinervus luffae fructus, the three-dimensional structure of a composite material preform having a bionic structure is built to improve the comprehensive performance of a composite material. With respect to the structure of a composite material preform braided using the prior art, the three-dimensional retinervus luffae fructus structure provided herein is advantaged in that:
(1) tightly combined with guide sleeves, fiber layers are three-dimensionally distributed in the whole structure of a preform, free from the concept of lamination in a long-distance range;
(2) the problem of high porosity and incomplete impregnation caused by the bubbles which are difficult to discharge during an impregnation process is effectively relieved; and
(3) the three-dimensional structure provided herein is suitable to prepare a large preform having a complicated shape highly automatically.

The mentioned above is only preferred embodiments of the disclosure but not limitation to the disclosure, it should be appreciated that various modification and variations can be devised by those of ordinary skill in the art. Any modification, substitute or improvement devised without departing from the spirit and scope of the disclosure should fall within the protection range of the disclosure.

## Claims

1. A method for modeling a composite material preform having a bionic structure, **characterized in that** the method includes:
(1) performing statistics and analysis on spatial structural characteristic values of a retinervus luffae fructus to obtain a mean values of the spatial structural characteristic values;
(2) building a model based on the mean values of the spatial structural characteristic values to obtain a primary retinervus luffae fructus structure model, the primary retinervus luffae fructus structure model includes a plurality of interconnected structural units; and
(3) performing a finite element stress analysis on the primary retinervus luffae fructus structure model and performing a structural adjustment on the structural units according to the stressed nephogram of the primary retinervus luffae fructus structure model, obtaining a bionic retinervus luffae fructus structure model as the structure model of the composite material preform.

2. The method according to claim 1, in characterized that the spatial structural characteristic values of a retinervus luffae fructus include: the distance between the longitudinal fibers of the whole retinervus luffae fructus and the structural units inside the retinervus luffae fructus, the positions of node groups of transverse fibers and longitudinal fibers, the phase relation between nodes in each node group and the spatial inclined angle of the fibers connected by each node.

3. The method according to claim 1, in characterized that a piece of CAD software is used in building the model, and a piece of ANSYS software is used in the finite element stress analysis.

4. A method for preparing a composite material having a bionic structure, **characterized in that** the method includes following steps:
1) setting up a guiding device and determining a fiber winding order based on the bionic retinervus luffae fructus structure model obtained by using the method of any one of claims 1 to 3;
2) winding fibers on the guiding device according to the determined fiber winding order, and obtaining a bionic retinervus luffae fructus structure as a composite material preform; and
3) combining the bionic retinervus luffae fructus structure with a matrix to form the composite material.

5. The method according to claim 4, in characterized that the guiding device comprises:
a guide template, and
a guide sleeve group which comprises a plurality of guide sleeves, the guide sleeves are fixedly arranged on the guide template, wherein one or more grooves are arranged on the guide sleeves according to the positions of the nodes in the bionic retinervus luffae fructus structure model so that the fibers can be embedded in the grooves.

6. The method according to claim 5, in characterized that a material of the guide sleeve is a carbon fiber or metal, and a material of the fibers is selected from carbon fiber or aramid fiber.

7. The method according to claim 4, in characterized that the matrix is a polymer or metal, wherein the polymer includes epoxy resin, phenolic resin, amino resin or unsaturated polyester.

8. A composite material having a bionic structure, **characterized in that** the composition material comprises:
a bionic retinervus luffae fructus structure obtained based on the bionic retinervus luffae fructus structure model obtained by using the method of any one of claims 1 to 3, and
a matrix filled in the bionic retinervus luffae fructus structure.

9. The composite material having a bionic structure according to claim 8, in characterized that the bionic retinervus luffae fructus structure comprises:
a guide sleeve group consisting of a plurality of guide sleeves; and
fibers which are wound on the guide sleeve group according to a fiber winding order determined based on the bionic retinervus luffae fructus structure model.

10. The composite material having a bionic structure according to claim 9, in characterized that one or more grooves are arranged on the guide sleeves so that the fibers can be embedded in the grooves.

11. The composite material having a bionic structure according to claim 10, in characterized that the bionic retinervus luffae fructus structure comprises: a plurality of structural units, each of the structural units comprises a transverse fiber layer and a guide sleeve group arranged intersecting the transverse fiber layer.

12. The composite material having a bionic structure according to claim 11, in characterized that one or more nodes of the fibers in the transverse fiber layer and the guide sleeves in each guide sleeve group are not located on the same plane.

## Patentansprüche

1. Verfahren zur Entwicklung von Verbundwerkstoffen mit einer bionischen Struktur, **dadurch gekennzeichnet, dass** das Verfahren umfasst:
(1) Durchführung von Statistik und Analyse für räumliche Strukturmerkmale von retinervus luffae fructus, um einen Mittelwert der räumlichen Strukturmerkmale zu erhalten
(2) Aufbau eines Modells basierend auf den Mittelwerten der räumlichen Strukturmerkmale, um ein erstes retinervus luffae fructus Strukturmodell zu erhalten, wobei das erste retinervus luffae fructus Strukturmodell eine Vielzahl an miteinander verbundenen räumlichen Einheiten umfasst; und
(3) Durchführung einer Finite Element Stressanalyse des ersten retinervus luffae fructus Strukturmodells und Durchführung einer strukturellen Anpassung der Struktureinheit gemäß des beanspruchten Nephrogramms des primären retinervus luffae fructus Strukturmodells, Erlangung eines bionischen retinervus luffae fructus Strukturmodells als Strukturmodell der Verbundwerkstoffvorform.

2. Verfahren gemäß Anspruch 1, **dadurch gekennzeichnet, dass** die räumlichen Strukturmerkmale des retinervus luffae fructus umfassen:
Den Abstand zwischen den Längsfasern des gesamten retinervus luffae fructus und die strukturellen Einheiten im Inneren des retinervus luffae fructus, die Positionen der Knotenpunkte der schrägen Fasern und Längsfasern, die Phasenlage zwischen den Knoten in jedem Knotenpunkt und die räumlich geneigten Winkel der Fasern verbunden durch jeden Knoten.

3. Verfahren gemäß Anspruch 1, **dadurch gekennzeichnet, dass** ein Teil der CAD-Software genutzt wird zur Herstellung des Modells und ein Teil der ANSYS-Software in der Finit-Element beanspruchten Analyse genutzt wird.

4. Ein Verfahren zur Herstellung eines Verbundwerkstoffmaterials mit einer bionischen Struktur **dadurch gekennzeichnet, dass** das Verfahren die vorliegenden Schritte umfasst:
(1) Einrichten einer Führungsvorrichtung und Bestimmen einer Faserwicklungsordnung basierend auf dem bionischen retinervus luffae fructus Strukturmodell erlangt durch Gebrauch des Verfahrens eines der Ansprüche 1 bis 3,
(2) Faserwicklungen der Führungsvorrichtung gemäß der bestimmten Faserwindungsanordnung und Erlangung einer bionischen retinervus luffae fructus Struktur als Verbundwerkstoffvorform; und
(3) Verbinden der bionischen retinervus luffae fructus Struktur mit einer Matrix, um ein Verbundmaterial herzustellen.

5. Verfahren gemäß Anspruch 4, **dadurch gekennzeichnet, dass** die Führungsvorrichtung umfasst:
Einen Leitfaden und eine Führungshülse, welche eine Vielzahl an Führungshülsengruppen umfasst, wobei die Führungshülsen ortsfest auf der Führungsvorlage angeordnet sind, wobei eine oder mehrere Aussparungen auf den Führungshilfen angeordnet sind gemäß den Positionen der Knoten in dem bionischen retinervus luffae fructus Strukturmodell, sodass die Fasern in den Ausnehmungen eingelassen werden können.

6. Das Verfahren gemäß Anspruch 5, **dadurch gekennzeichnet, dass** ein Material der Führungshülse Carbonfaser oder Metall ist und dass ein Material der Fasern ausgewählt ist aus Carbonfaser oder Aramidfasern.

7. Verfahren gemäß Anspruch 4, **dadurch gekennzeichnet dass** die Matrix ein Polymer oder ein Metall ist, wobei das Polymer ein Epoxidharz, Phenolharz, Aminoharz oder ungesättigter Polyester ist.

8. Ein Verbundwerkstoff mit einer bionischen Struktur **dadurch gekennzeichnet, dass** der Verbundwerkstoff umfasst:
eine bionische retinervus luffae fructus Struktur basierend auf dem bionischen retinervus luffae fructus Strukturmodell, erlangt durch Verwendung des Verfahrens gemäß einem der Ansprüche 1 bis 3 und einer Matrix eingesetzt in die bionische retinervus luffae fructus Struktur.

9. Der Verbundwerkstoff mit einer bionischen Struktur gemäß Anspruch 8 **dadurch gekennzeichnet, dass** die bionische retinervus luffae fructus Struktur umfasst:
eine Führungshülsengruppe umfassend eine Vielzahl an Führungshülsen und Fasern, welche die Führungshülsengruppe umwinden gemäß einer Faserwindungsordnung, festgelegt aus dem bionischen retinervus luffae fructus Strukturmodell.

10. Verbundwerkstoff mit einer bionischen Struktur gemäß Anspruch 9 **dadurch gekennzeichnet, dass** eine oder mehrere Ausnehmungen derart auf der Führungshülse angeordnet sind, sodass die Fasern in die Ausnehmungen eingebettet werden können.

11. Verbundwerkstoffmaterial mit einer bionischen Struktur gemäß Anspruch 10 **dadurch gekennzeichnet, dass** die bionische retinervus luffae fructus Struktur umfasst:
Eine Vielzahl an strukturellen Einheiten, wobei jede der strukturellen Einheiten eine schräge Faserlage und eine Führungshülsengruppe umfasst, derart angeordnet, dass diese die schrägen Faserschichten (10) durchqueren.

12. Verbundwerkstoff mit einer bionischen Struktur gemäß Anspruch 11 **dadurch gekennzeichnet, dass** einer oder mehrere Knoten der Fasern in den schrägen Faserschichten und die Führungshülsen in jeder Führungshülsengruppe nicht in der gleichen Ebene angeordnet sind.

## Revendications

1. Procédé de modélisation d'une préforme de matière composite ayant une structure bionique, **caractérisé en ce que** le procédé inclut :
(1) réaliser des statistiques et une analyse sur des valeurs caractéristiques structurales spatiales d'un retinervus luffae fructus afin d'obtenir des valeurs moyennes des valeurs caractéristiques structurales spatiales ;
(2) construire un modèle basé sur les valeurs moyennes des valeurs caractéristiques structurales spatiales afin d'obtenir un modèle de structure de retinervus luffae fructus primaire, le modèle de structure de retinervus luffae fructus primaire incluant une pluralité d'unités structurales interconnectées ; et
(3) réaliser une analyse de contrainte par éléments finis sur le modèle de structure de retinervus luffae fructus primaire et réaliser un ajustement structural sur les unités structurales selon le néphogramme contraint du modèle de structure de retinervus luffae fructus primaire, obtenant un modèle de structure de retinervus luffae fructus bionique en tant que modèle de structure de la préforme de matière composite.

2. Procédé selon la revendication 1, **caractérisé en ce que** les valeurs caractéristiques structurales spatiales d'un retinervus luffae fructus incluent : la distance entre les fibres longitudinales du retinervus luffae fructus entier et les unités structurales à l'intérieur du retinervus luffae fructus, les positions de groupes de noeuds de fibres transversales et de fibres longitudinales, la relation de phase entre noeuds dans chaque groupe de noeuds et l'angle oblique spatial des fibres connectées par chaque noeud.

3. Procédé selon la revendication 1, **caractérisé en ce qu'**un élément de logiciel de conception assistée par ordinateur (CAO) est utilisé dans l'établissement du modèle, et un élément de logiciel ANSYS est utilisé dans l'analyse de contrainte par éléments finis.

4. Procédé de préparation d'une matière composite ayant une structure bionique, **caractérisé en ce que** le procédé inclut les étapes suivantes :
1) préparer un dispositif de guidage et déterminer un ordre d'enroulement de fibre sur la base du modèle de structure de retinervus luffae fructus bionique obtenu en utilisant le procédé selon l'une quelconque des revendications 1 à 3 ;
2) enrouler des fibres sur le dispositif de guidage selon l'ordre d'enroulement de fibre déterminé, et l'obtention d'une structure de retinervus luffae fructus bionique en tant que préforme de matière composite ; et
3) combiner la structure de retinervus luffae fructus bionique avec une matrice pour former la matière composite.

5. Procédé selon la revendication 4, **caractérisé en ce que** le dispositif de guidage comprend :
un gabarit de guide, et
un groupe de manchons de guide lequel comprend une pluralité de manchons de guide, les manchons de guide sont agencés de manière fixe sur le gabarit de guide, où une ou plusieurs rainures sont ménagées sur les manchons de guide selon les positions des noeuds dans le modèle de structure de retinervus luffae fructus bionique de sorte que les fibres peuvent être encastrées dans les rainures.

6. Procédé selon la revendication 5, **caractérisé en ce qu'**une matière du manchon de guide est une fibre de carbone ou un métal, et une matière des fibres est sélectionnée parmi une fibre de carbone et une fibre aramide.

7. Procédé selon la revendication 4, **caractérisé en ce que** la matrice est un polymère ou un métal, où le polymère inclut une résine époxy, une résine phénolique, une résine amino ou un polyester insaturé.

8. Matière composite ayant une structure bionique, **caractérisée en ce que** la matière de composition comprend :
une structure de retinervus luffae fructus bionique obtenue sur la base du modèle de structure de retinervus luffae fructus bionique obtenu en utilisant le procédé selon l'une quelconque des revendications 1 à 3, et
une matrice venant remplir la structure de retinervus luffae fructus bionique.

9. Matière composite ayant une structure bionique selon la revendication 8, **caractérisée en ce que** la structure de retinervus luffae fructus bionique comprend :
un groupe de manchons de guide constitué d'une pluralité de manchons de guide ; et
des fibres lesquelles sont enroulées sur le groupe de manchons de guide selon l'ordre d'enroulement de fibre déterminé sur la base du modèle de structure de retinervus luffae fructus bionique.

10. Matière composite ayant une structure bionique selon la revendication 9, **caractérisée en ce qu'**une ou plusieurs rainures sont ménagées sur les manchons de guide de sorte que les fibres peuvent être encastrées dans les rainures.

11. Matière composite ayant une structure bionique selon la revendication 10, **caractérisée en ce que** la structure de retinervus luffae fructus bionique comprend : une pluralité d'unités structurales, chacune des unités structurales comprend une couche de fibres transversales et un groupe de manchons de guide agencé de manière croiser la couche de fibres transversales.

12. Matière composite ayant une structure bionique selon la revendication 11, **caractérisée en ce qu'**un ou plusieurs noeuds des fibres dans la couche de fibres transversales et les manchons de guide dans chaque groupe de manchons de guide ne sont pas situés dans le même plan.
